# EUROPEAN PATENT APPLICATION

(11) **EP 1 855 196 A1**
(43) Date of publication of application: **14.11.2007**
(21) Application number: 07107299.5
(22) Date of filing: 02.05.2007
(51) Int. Cl.: G06F 9/44

(54) **Image forming device and application execution method**

(30) Priority: 02.05.2006 JP 2006128553; 04.04.2007 JP 2007098069
(71) Applicant: Ricoh Company, Ltd., Tokyo 143-8555 (JP)
(72) Inventor: Matsushima, Hiroyuki, Yokohama-shi Kanagawa (JP)
(74) Representative: Schwabe - Sandmair - Marx

(57) **Abstract**

An image forming device is disclosed that is able to simplify function customization or function expansion. The image forming device includes one or more input units that input image data for image processing; one or more output units that output resulting data of the image processing; a first filter that controls a data-input process with data from the input unit; and a second filter that controls a data-output process and sends data to the output unit. An application is formed by connecting the first filter and the second filter.

## Description

### BACKGROUND OF THE INVENTION

### 1. Field of the Invention

The present invention relates to an image forming device and an application execution method, and particularly, to an image forming device including plural kinds of input units for inputting image data and plural kinds of output units for outputting image processing results, and an application execution method.

### 2. Description of the Related Art

In recent years and continuing, functions of a printer, a copier, a scanner, a facsimile machine, and others are being incorporated into the same housing, and thereby realizing an image forming device known as a multi-function peripheral. The multi-function peripheral, although suffering from a severe limitation of memory capacity, has a central processing unit (CPU), just like a general purpose computer, and implements the above various functions by software application control.

For example, Japanese Patent Gazette No. 3679349 discloses an image forming device which includes a platform able to be commonly used by different applications, and the applications can be installed by using an API (Application Programming Interface) of the platform. In the above image forming device, since functions commonly used by different applications are provided as the platform, it is possible to prevent duplicate functions from being installed for each function, and improve developing efficiency of the overall application.

However, in the related art, generally, in the platform which has an API able to be commonly used by different applications, if granularity of functions or interfaces provided by the platform is not appropriately designed, the expected application developing efficiency cannot be obtained.

For example, when the granularity is too small, the API has to be called for many times even for an application merely providing simple services, and hence, the source code becomes complicated. On the other hand, when the granularity is too large, in the event that it is desired to install an application for providing services used to modify part of functions given by the interface, it is necessary to modify the platform itself, and this may increase of the number of developing steps. Especially, when modules in the platform depend on each other strongly, sometimes, in order to add a new function into the platform, it is necessary to modify existing portions of the platform, and this makes the situation more complicated.

In addition, in the related art, when it is desired to install an application involving a modification to a portion of a service provided by an existing application (for example, the new application involves a modification to an image input procedure of the existing application), it is not allowed to call out the existing application for implementing the other portion of the service. As a result, it is necessary to re-write the source code and install a new application.

### SUMMARY OF THE INVENTION

An embodiment of the present invention may solve one or more problems of the related art.

A preferred embodiment of the present invention may provide an image forming device able to easily customize or expand functions thereof, and a method of executing an application.

According to a first aspect of the present invention, there is provided an image forming device, comprising:
one or more input units that input image data for image processing;
one or more output units that output resulting data of the image processing;
a first filter that controls a data-input process from the input unit; and
a second filter that controls a data-output process to the output unit,
wherein
an application is formed by connecting the first filter and the second filter.

As an embodiment, the first filter outputs a data input from the input unit, the second filter outputs a data input to the second filter to the output unit, and the data output by the first filter is input to the second filter connected to the first filter.

As an embodiment, the image forming device further comprises:
a third filter that executes the image processing according to a type of the image processing,
wherein
an application is formed by connecting the first filter, the third filter and the second filter.

As an embodiment, the third filter outputs data generated by executing the image processing on the data input to the third filter, and
the data output by the first filter is input to the third filter connected to the first filter, and the data output by the third filter is input to the second filter.

As an embodiment, the first filter, the third filter, and the second filter are able to be installed or un-installed independently.

As an embodiment, the image forming device further comprises:
a user interface that has a display function and allows an execution condition of each of the first filter, the third filter, and the second filter in units of filters.

As an embodiment, the image forming device further comprises:
a transmission unit that inputs the data output by one filter to another filter connected to the one filter,
wherein
the one filter is connected to the other filter by the transmission unit.

As an embodiment, the image forming device further comprises:
a filter selection unit that selects one or more filters according to the execution condition of the application; and
a filter connection unit that connects the selected filters through the transmission unit, and outputs an execution request to each of the selected filters,
wherein
operations of the selected filters are synchronized by the transmission unit.

As an embodiment, an operation of one filter is started when data input to the transmission unit connected to an input side of the one filter are detected.

As an embodiment, the transmission unit is of a plurality of types respectively corresponding to actual means used for data transmission, and
the filter connection unit selects the type of the transmission unit used for connecting one or more filters in response to a combination of the one or more filters to be connected.

As an embodiment, the image forming device further comprises:
a correspondence relation management unit that registers correspondence relationships between the combination of the filters to be connected and the transmission unit,
wherein
the filter connection unit, based on the correspondence relationship registered in the correspondence relation management unit, selects the type of the transmission unit associated with the combination of the filters to be connected.

As an embodiment, the image forming device further comprises:
an operations panel,
wherein
a filter to be used is selected from a plurality of filters displayed on the operations panel.

As an embodiment, execution conditions of a plurality of filters are able to be specified in units of filters on the operations panel.

As an embodiment, the image forming device further comprises:
a function execution unit that corresponds to a combination of a plurality of filters, said combination of the plurality of filters being defined in advance,
wherein
the function execution unit executes the plurality of filters included in the combination.

Preferably, the function execution unit obtains information of a graphic image for setting execution conditions of the filters by the filters included in the combination corresponding to the function execution unit.

According to a second aspect of the present invention, there is provided an application execution method executed in an image forming device including one or more input units that input image data for image processing, and one or more output units that output resulting data of the image processing, said method comprising:
a first selection step of selecting a first filter that controls a data-input process from the input unit;
a second selection step of selecting a second filter that controls a data-output process to the output unit; and
an execution step of executing an application formed by connecting the first filter and the second filter.

According to the present invention, it is possible to provide an image forming device able to be easily customized or to have expanded functions thereof.

These and other objects, features, and advantages of the present invention will become more apparent from the following detailed description of preferred embodiments given with reference to the accompanying drawings.

### BRIEF DESCRIPTION OF THE DRAWINGS

FIG. 1 is a block diagram illustrating an example of a software configuration of a multi-function peripheral (MFP) according to a first embodiment of the present invention;
FIG. 2 is a diagram explaining the concept of pipes and filters;
FIG. 3 is a table illustrating a structure of a filter;
FIG. 4 is a table illustrating an example of filter combinations for implementing various functions of the multi-function peripheral 1 according to the present embodiment;
FIG. 5 is a flowchart illustrating operations of the multi-function peripheral 1 of the present embodiment for implementing one function;
FIG. 6 is a flowchart illustrating further operations, continuing from step S108 in FIG. 5, of the multi-function peripheral 1 of the present embodiment for implementing one function;
FIG. 7 is a block diagram illustrating an example of filter selection operations on an operations panel according to the present embodiment;
FIG. 8 is a diagram schematically illustrating contents of the request sent from the user interface layer 10 to the control layer 20;
FIG. 9 is a table illustrating an example of the correspondence relationship between the filters and the pipes;
FIG. 10 is a diagram schematically illustrating information generated by the control layer 20;
FIG. 11 is a diagram schematically illustrating a procedure for transmitting data between filters through pipes;
FIG. 12 is a block diagram illustrating a procedure of implementing a copy function according to the present embodiment;
FIG. 13 is a diagram schematically illustrating a status of connecting filters associated with the copy function by pipes;
FIG. 14 is a block diagram illustrating a procedure for implementing a printing function according to the present embodiment;
FIG. 15 is a diagram schematically illustrating a status of connecting filters associated with the printing function by pipes;
FIG. 16 is a block diagram illustrating an example of a software configuration of a multi-function peripheral (MFP) according to a second embodiment of the present invention;
FIG. 17 is a table illustrating a configuration of the activity 31;
FIG. 18 is a block diagram illustrating examples of operational screens for utilizing the activities 31 according to the present embodiment;
FIG. 19 is a flowchart illustrating operations of the multi document activity 31c of the present embodiment;
FIG. 20 is a flowchart illustrating operations of the copy activity 31a of the present embodiment;
FIG. 21 is a flowchart illustrating operations of the print activity 31c of the present embodiment; and
FIG. 22 is a block diagram illustrating an example of a hardware configuration of the multi-function peripheral (MFP) according to an embodiment of the present invention.

### DESCRIPTION OF THE PREFERRED EMBODIMENTS

Below, preferred embodiments of the present invention are explained with reference to the accompanying drawings.

### First Embodiment

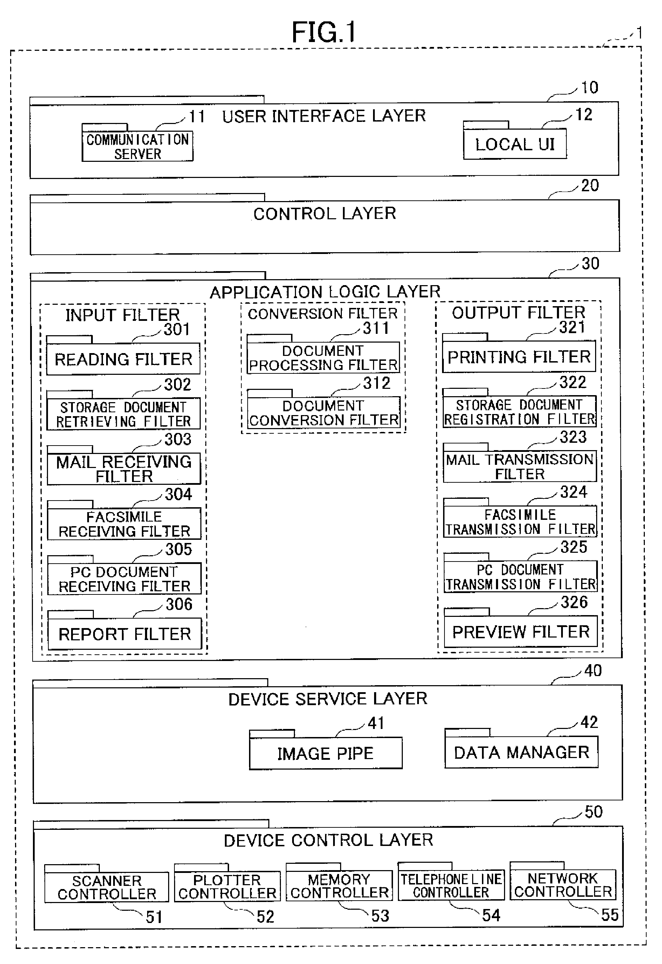

FIG. 1 is a block diagram illustrating an example of a software configuration of a multi-function peripheral (MFP) according to a first embodiment of the present invention.

Here, a "multi-function peripheral" means an image forming device which incorporates multiple functions of a printer, a copier, a scanner, a facsimile machine, and others into the same housing.

As shown in FIG. 1, a software configuration of a multi-function peripheral 1 includes a user interface layer 10, a control layer 20, an application logic layer 30, a device service layer 40, and a device control layer 50.

Here, the relationship between the layers shown in FIG. 1 is referred to as "inter-layer calling relation", in other words, basically an upper layer calls out a lower layer.

The user interface layer 10 receives a request for function execution, such as copying, printing, scanning, or facsimile transmission. For example, the user interface layer 10 includes a communication server 11 and a local user interface (UI) 12.

For example, the communication server 11 receives the request from an un-illustrated client personal computer (PC) through a network, and the local user interface (UI) 12 receives the input request through an un-illustrated operations panel.

The request received by the user interface layer 10 is transmitted to the control layer 20.

The control layer 20 controls processing for implementing the requested function. Specifically, the control layer 20 is connected to a filter in the application logic layer 30 in response to the requested function, and controls function execution based on the filter.

It should be noted that in this specification, "a function of the multi-function peripheral 1" means a complete unit service provided by the multi-function peripheral 1 to a user, and the term "complete" means a period from the time the request is input to the time a final result is obtained. Namely, from the point of view of software, "a function of the multi-function peripheral 1" is equivalent to an application which provides a complete unit service.

The application logic layer 30 includes various parts for implementing the functions provided by the multi-function peripheral 1. Namely, one function can be implemented by combining parts of the application logic layer 30. In the present embodiment, each of the parts of the application logic layer 30 is referred to as "a filter", because the software architecture of the multi-function peripheral 1 is referred to as "pipes and filters".

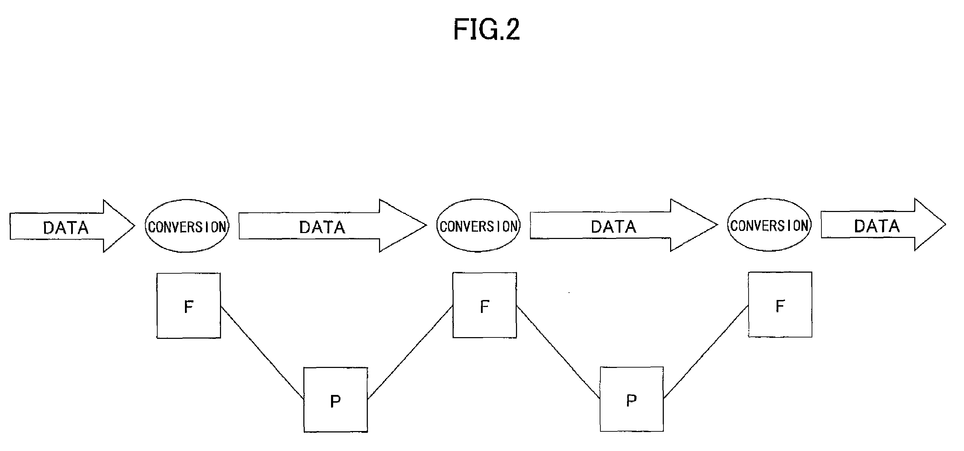

FIG. 2 is a diagram explaining the concept of pipes and filters.

In FIG. 2, a letter "F" indicates a filter, and a letter "P" indicates a pipe. As shown in FIG. 2, the filters are connected by pipes. The filters convert the input data, and output the results. The pipes transmit data output from a filter to the next filter.

That is, in the multi-function peripheral 1 of the present embodiment, each function of the multi-function peripheral 1 can be regarded as a series of conversions of document data. The function of the multi-function peripheral 1 can be generalized to be composed of document input, document processing, and document output. Hence, "input", "processing", or "output" can be regarded as "conversion", and one software part for implementing one conversion can be formed as a filter. Particularly, a filter for implementing data input is referred to as an "input filter", a filter for implementing conversion is referred to as a "conversion filter", and a filter for implementing data output is referred to as an "output filter". It should be noted that different filters are independent from each other, that is, there is no dependent relationship (calling relationship) between filters. Thus, it is possible to perform software addition (namely, installation) and software deletion (namely, un-installation) in units of filters.

Returning to FIG. 1, the application logic layer 30 includes the following input filters, that is, a reading filter 301, a stored-document retrieving filter 302, a mail receiving filter 303, a facsimile receiving filter 304, a PC document receiving filter 305, and a report filter 306.

The reading filter 301 controls an image data reading operation of a scanner, and outputs the thus obtained image data.

The stored-document retrieving filter 302 reads out image data (or document data) stored in a storage device of the multi-function peripheral 1, and outputs the thus obtained image data.

The mail receiving filter 303 receives an electronic mail, and outputs data included in the electronic mail.

The facsimile receiving filter 304 receives a facsimile and outputs data included in the facsimile.

The PC document receiving filter 305 receives data to be printed (hereinafter, referred to as "printing data" where appropriate) from a not-illustrated PC, and outputs the received printing data.

The report filter 306 outputs setting information and history information of the multi-function peripheral 1.

In addition, the application logic layer 30 includes the following conversion filters, that is, a document processing filter 311 and a document conversion filter 312.

The document processing filter 311 performs appropriate image conversion processing on input data, such as image combination, image enlargement, and image reduction, and outputs the resulting data.

The document conversion filter 312 performs rendering. That is, the document conversion filter 312 converts input PostScript data into bitmap data, and outputs the resulting data.

In addition, the application logic layer 30 includes the following output filters, that is, a printing filter 321, a stored-document registration filter 322, a mail transmission filter 323, a facsimile transmission filter 324, a PC document transmission filter 325, and a preview filter 326.

The printing filter 321 outputs input image data to a plotter, namely, prints the input image data by using the plotter.

The stored-document registration filter 322 stores the input data in a storage device (for example, a hard disk) of the multi-function peripheral 1.

The mail transmission filter 323 transmits an electronic mail with the input data attached.

The facsimile transmission filter 324 facsimiles the input data.

The PC document transmission filter 325 transmits the input data to a client PC.

The preview filter 326 displays the input data on an operations panel of the multi-function peripheral 1.

The device service layer 40 has lower-ranking functions commonly used by the filters of the application logic layer 30. For example, the device service layer 40 includes an image pipe 41 and a data manager 42.

The image pipe 41 implements the above pipe functions.

The data manager 42 manages various databases. For example, the data manager 42 manages a database containing user information, or a database storing document data and image data.

The device control layer 50 is composed of program module groups, known as "drivers", for controlling various devices (hardware). Specifically, the device control layer 50 includes a scanner controller 51, a plotter controller 52, a memory controller 53, a telephone line controller 54, and a network controller 55.

The scanner controller 51, the plotter controller 52, the memory controller 53, the telephone line controller 54, and the network controller 55 respectively control a scanner, a plotter, a memory, a telephone line, and a network associated with the multi-function peripheral 1.

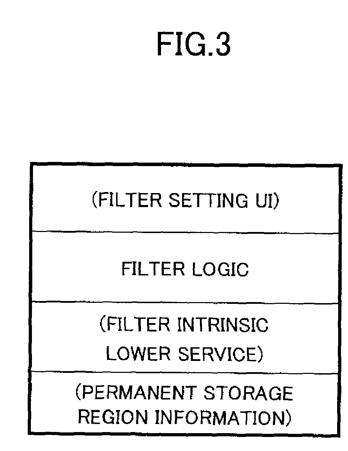

Below, the filters are explained more specifically with reference to FIG. 3.

FIG. 3 is a table illustrating a structure of a filter.

As shown in FIG. 3, a filter includes a filter setting user interface (UI), filter logic, a filter intrinsic lower service, and permanent storage region information. It should be noted that the filter setting user interface (UI), the filter intrinsic lower service, and the permanent storage region information are not indispensable, that is, a filter does not necessarily includes one or more of the filter setting user interface (UI), the filter intrinsic lower service, and the permanent storage region information.

The filter setting user interface is a program to display a graphic image on an operations panel to set execution conditions of the filter. For example, for the reading filter 301, the filter setting user interface corresponds to a graphic image for setting image resolution, density, image types, and so on. Since the representation of the operations panel can be executed by using HTML data or by means of scripts, the filter setting user interface may be HTML data or scripts.

The filter logic is for implementing functions of a filter. That is, the functions of the filter are implemented by utilizing the filter intrinsic lower service, which is a constituent element of the filter, the device service layer 40, or the device control layer 50 responsive to execution conditions set through the filter setting user interface. For example, for the reading filter 301, the filter logic corresponds to the logic for controlling document reading operations of a scanner.

The filter intrinsic lower service is a lower-ranking function (a library) required for implementing the filter logic. For example, for a function corresponding to the device service layer 40 or the device control layer 50, if the function is not used by another filter, it may be incorporated into a filter, serving as a part of the filter. For example, for the reading filter 301, the filter intrinsic lower service corresponds to a function for controlling a scanner. In the present embodiment, a scanner controller 51 is provided in the device control layer 50, hence, the reading filter 301 does not necessarily include the filter intrinsic lower service.

The permanent storage region information corresponds to setting information of the filter, such as default values of execution conditions, and a scheme definition of data which ought to be stored in a non-volatile memory. The scheme definition is registered in the data manager 42 when installing the filter.

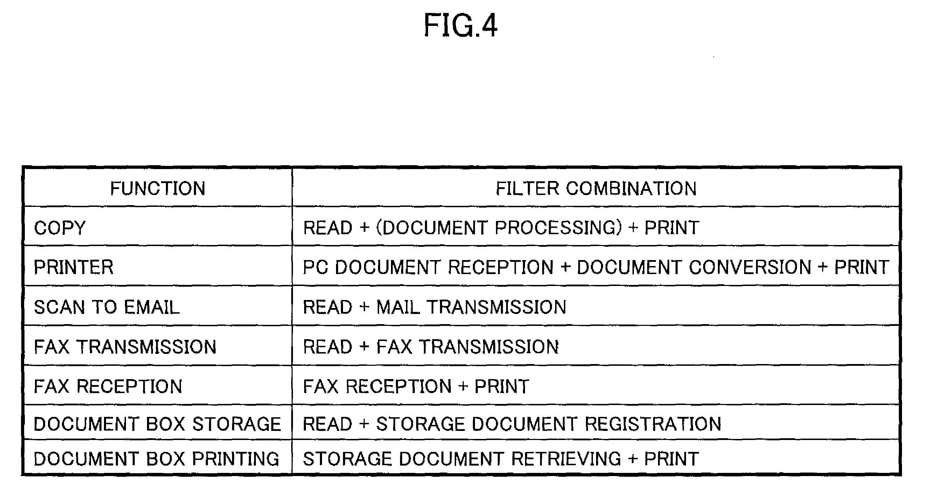

FIG. 4 is a table illustrating an example of filter combinations for implementing various functions of the multi-function peripheral 1 according to the present embodiment.

As shown in FIG. 4, for example, a function of copying may be implemented by connecting the reading filter 301 and the printing filter 321, because the image data, which are read from a manuscript by using the reading filter 301, are printed by the printing filter 321. In addition, when it is requested to perform image combination, image enlargement, or image reduction, the document processing filter 311, which is capable of these processes, can be inserted between the reading filter 301 and the printing filter 321.

A function of a printer may be implemented by connecting the PC document receiving filter 305, the document conversion filter 312, and the printing filter 321.

A function of "scan to email" (that is, scan a document and transmit the obtained image data by email) may be implemented by connecting the reading filter 301 and the mail transmission filter 323.

A function of facsimile transmission may be implemented by connecting the reading filter 301 and the facsimile transmission filter 324.

A function of facsimile reception may be implemented by connecting the facsimile receiving filter 304 and the printing filter 321.

A function of document box storage (that is, scan a document and store the obtained image data in the multi-function peripheral 1) may be implemented by connecting the reading filter 301 and the stored-document registration filter 322.

A function of document box printing (that is, print document data stored in the multi-function peripheral 1) may be implemented by connecting the stored-document retrieving filter 302 and the printing filter 321.

In FIG. 4, for example, the reading filter 301 is used in four functions. In other words, each filter can be used in plural functions, and hence, it is possible to reduce the number of development steps for implementing each of the various functions. For example, the copy function and the scan function (document box storage) have similar user interfaces for setting their execution conditions, but in the related art, when these functions are implemented by applications, a user interface is installed for each of the applications.

In contrast, in the present embodiment, the execution conditions of either the copy function or the scan function can be set by using the reading filter 301, and the user interface is shared by plural applications.

Below, implementation of new functions is described.

First, consider implementation of a function 1, which corresponds to a function of printing data sent from a client PC by PDL (Page Description Language) not supported by the multi-function peripheral 1. Below, the PDL not supported by the multi-function peripheral 1 is referred to as "other-PDL".

In this case, the printing function shown in FIG. 4 can be used as a prototype. However, in the printing function, it is a basic assumption that data output from the PC document receiving filter 305 has a PostScript form, since the document conversion filter 312 can only handle data in PostScript form.

However, concerning the function 1, the data received by and output from the PC document receiving filter 305 is in form of other-PDL. Thus, even when the data in other-PDL form is transmitted directly to the document conversion filter 312, the document conversion filter 312 cannot appropriately handle the data. Hence, if an additional conversion filter is installed for data conversion from the other-PDL form to the PostScript form (below, such an additional conversion filter is referred to as "other-PDL-PS conversion filter"), and if the conversion filter is inserted between the PC document receiving filter 305 and the document conversion filter 312, the function 1 can be implemented. In other words, the function 1 can be implemented by connecting the PC document receiving filter 305, the other-PDL-PS conversion filter, the document conversion filter 312, and the printing filter 321.

Next, consider implementation of a function 2, which corresponds to a function of collecting information from a Website and printing the collected information. In this case, since there is not a filter able to collect information from the Website, it is necessary to newly install at least an input filter for collecting information from the Website. Below, such an input filter is referred to as "Web collecting filter"). In addition, in the function 2, since it is desired to print data finally, it is appropriate to use the printing filter 321 as an output filter.

Here, there arises a problem in how the Web collecting filter and the printing filter 321 are connected. Specifically, on one hand, it is necessary that the input data to the printing filter 321 be subjected to rendering and be converted into bitmap form; on the other hand, it is not appropriate to install the rendering function in the Web collecting filter since the procedure of installing the rendering function is complicated. Hence, one may think of utilizing the document conversion filter 312, which already has the rendering function. However, as described above, data input to the document conversion filter 312 should be in PostScript form. Thus, if the Web collecting filter is installed such that the collected information is output in PostScript form, the Web collecting filter can be connected to the document conversion filter 312.

In this way, the function 2 can be implemented by connecting the Web collecting filter to the document conversion filter 312, and connecting the document conversion filter 312 to the printing filter 321.

Below, descriptions are made of operations of the multi-function peripheral 1 of the present embodiment.

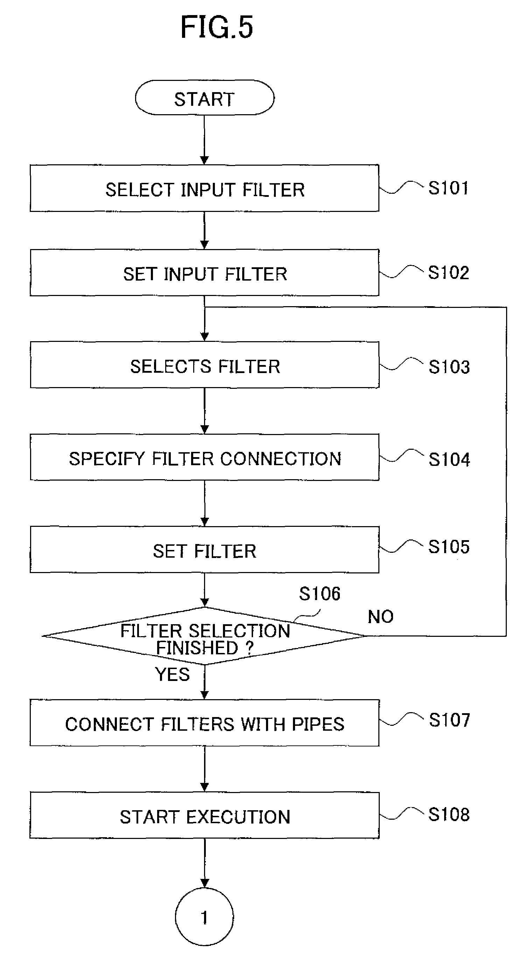

FIG. 5 is a flowchart illustrating operations of the multi-function peripheral 1 of the present embodiment for implementing one function.

As shown in FIG. 5, in step S101, the user selects an input filter.

In step S102, execution conditions of the selected input filter are set.

In step S103, the user selects a conversion filter or an output filter in a similar way.

In step S104, the connection between the filters is specified.

In step S105, execution conditions of the filters are specified.

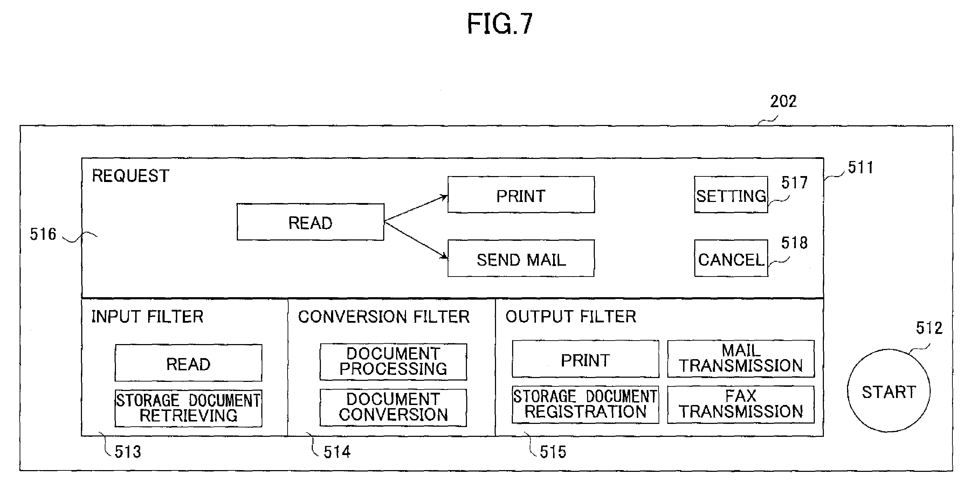

For example, the above steps are performed under control of the local user interface (UI) 12 by using an operations panel as shown in FIG. 7.

FIG. 7 is a block diagram illustrating an example of filter selection operations on an operations panel according to the present embodiment.

As shown in FIG. 7, an operation panel 202 includes a touch panel 511 and a start button 512.

A hardware system of the touch panel 511 includes a touching operation part for data input by touching, and a display for outputting data by displaying.

The start button 512 issues commands to start execution of a requested function.

On the touch panel 511, there is displayed a graphic image (below, referred to as "input request screen" where appropriate), which includes an input filter selection area 513, a conversion filter selection area 514, an output filter selection area 515, and a request display area 516.

In the input filter selection area 513, the user selects the input filter, and buttons of different input filters are displayed. When one of the buttons of the input filters is selected in the input filter selection area 513, the button of the input filter corresponding to the selected button is displayed in the request display area 516.

In FIG. 7, for simplicity of illustration, only buttons of the reading filter 301 and the stored-document retrieving filter 302 are presented.

In the conversion filter selection area 514, the user selects the conversion filter, and buttons of different conversion filters are displayed. When one of the buttons of the conversion filters is selected in the conversion filter selection area 514, the button of the conversion filter corresponding to the selected button is displayed in the request display area 516.

In FIG. 7, buttons of the document processing filter 311 and the document conversion filter 312 are presented in the conversion filter selection area 514.

In the output filter selection area 515, the user selects the output filter, and buttons of different output filters are displayed. When one of the buttons of the output filters is selected in the output filter selection area 515, the button of the output filter corresponding to the selected button is displayed in the request display area 516.

In FIG. 7, for simplicity of illustration, only buttons of the printing filter 321, the stored-document registration filter 322, the mail transmission filter 323, and the facsimile transmission filter 324 are presented in the output filter selection area 515.

Information of all installed filters (input filter, conversion filter, output filter) is stored in the storage device, and, for example, is controlled by the control layer 20. Therefore, by querying the control layer 20, the local user interface (UI) 12 can obtain the filter information used for displaying the input filter selection area 513, the conversion filter selection area 514, and the output filter selection area 515.

In the request display area 516, there are displayed buttons of the selected filters in the input filter selection area 513, the conversion filter selection area 514, the output filter selection area 515, and the input filter, the conversion filter, and the output filter are connected by arrows indicating data flow and pipes. By changing the arrows, it is possible to change the order of the filters to be executed. Observing images displayed in the request display area 516, the user is able to recognize filters to be used and the relevant data flow.

In the request display area 516, there are further displayed a setting button 517 and a cancel button 518.

The setting button 517 causes displaying a setting screen of a filter when the button of the filter is selected in the request display area 516. Namely, when the setting button 517 is selected (for example, by touching the setting button 517), the setting screen of the selected filter is displayed on the touch panel 511 pursuant to the filter setting user interface (UI) of the selected filter.

The cancel button 518 stops usage of a filter when the button of the filter is selected in the request display area 516.

Corresponding to one function, a number of the input filters, the conversion filters, or the output filters can be selected. For example, when combining a scanned image and an image stored in the multi-function peripheral 1, and then printing and faxing the combined image, at least two input filters (the reading filter 301 and the stored-document retrieving filter 302) and two output filters (the printing filter 321 and the facsimile transmission filter 324) are selected.

Returning to FIG. 5, in step S106, when filter selection is finished, if the start button 512 is selected (for example, touched), the user interface layer 10 notifies the control layer 20 of contents of the request.

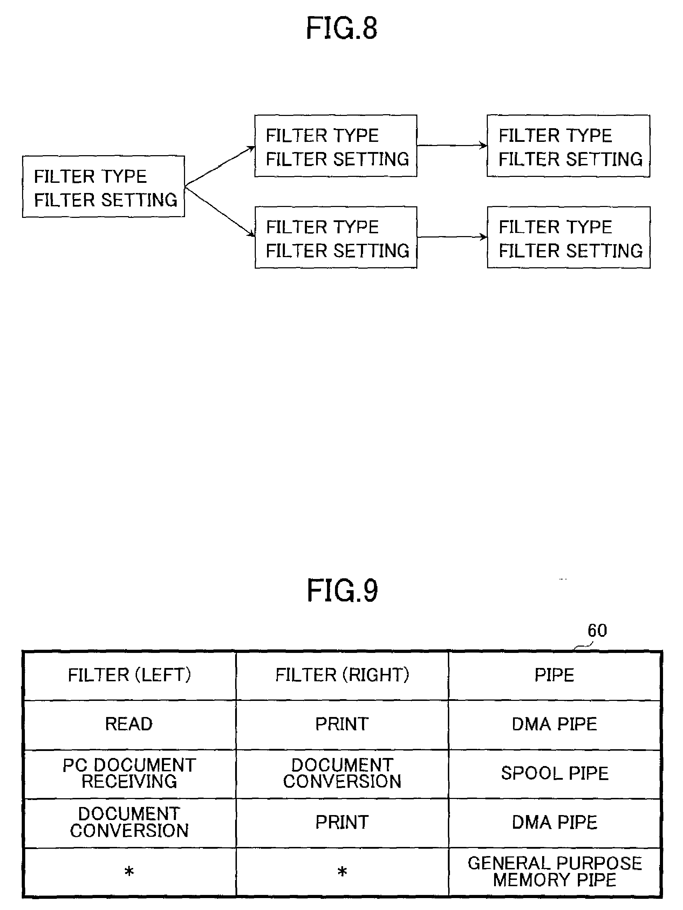

FIG. 8 is a diagram schematically illustrating contents of the request notified from the user interface layer 10 to the control layer 20.

As shown in FIG. 8, the request from the user interface layer 10 includes a filter type and filter setting information of each filter selected in the user interface layer 10, and the order of executing the filters. In FIG. 8, the arrows connecting blocks indicate the order of executing the filters.

Returning to FIG. 5, in step S107, when receiving the request as shown in FIG. 8, the control layer 20 connects the selected filters with pipes.

The pipe can be a memory (including a hard disk drive (HDD)). Depending on filters at two ends of the pipe, the type of the memory to be used is different. For example, the correspondence relationship between the filter and the pipe can be defined in advance and stored in the HDD of the multi-function peripheral 1.

FIG. 9 is a table illustrating an example of the correspondence relationship between the filters and the pipes.

As shown in a table 60 in FIG. 9, the reading filter 301 and the printing filter 321, or the document conversion filter 312 and the printing filter 321, are connected by a DMA (Direct Memory Access) pipe for high speed data transmission. Further, the PC document receiving filter 305 and the document conversion filter 312 are connected by a spool pipe. The "spool pipe" is a pipe using the HDD, specifically, data output from a filter on the left side is spooled (saved) in the HDD before being read out by a filter on the right side.

In FIG. 9, except for the above two cases, other filters are connected by general purpose memory pipes. The "general purpose memory pipe" is a pipe performing data transmission by a RAM buffer having a limited size. The table 60 in FIG. 9 is editable, for example, extension (addition) or deletion of filters is allowed. The image pipe 41 in FIG. 1 is just an abstract representation of modules for providing the above various pipes.

For example, the control layer 20 connects filters with designated pipes in accordance with the table 60 in FIG. 9.

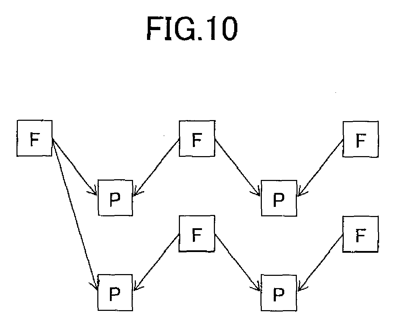

FIG. 10 is a diagram schematically illustrating information generated by the control layer 20.

Specifically, FIG. 10 shows connection conditions of filters (F), which are connected by pipes (P).

Returning to FIG. 5, in step S108, the control layer 20 requests these filters to be executed in parallel. That is, the control layer 20 requests the filters to be executed nearly at the same time, but not in order of calling the filters, nor in order of connections of the filters. Synchronization of the filters can be obtained by the pipes.

Receiving the execution request from the control layer 20, each of the filters waits for data input into the pipe at the input side of the filter. Since an input filter does not have a pipe at its input side, the input filter starts operations responsive to the execution request.

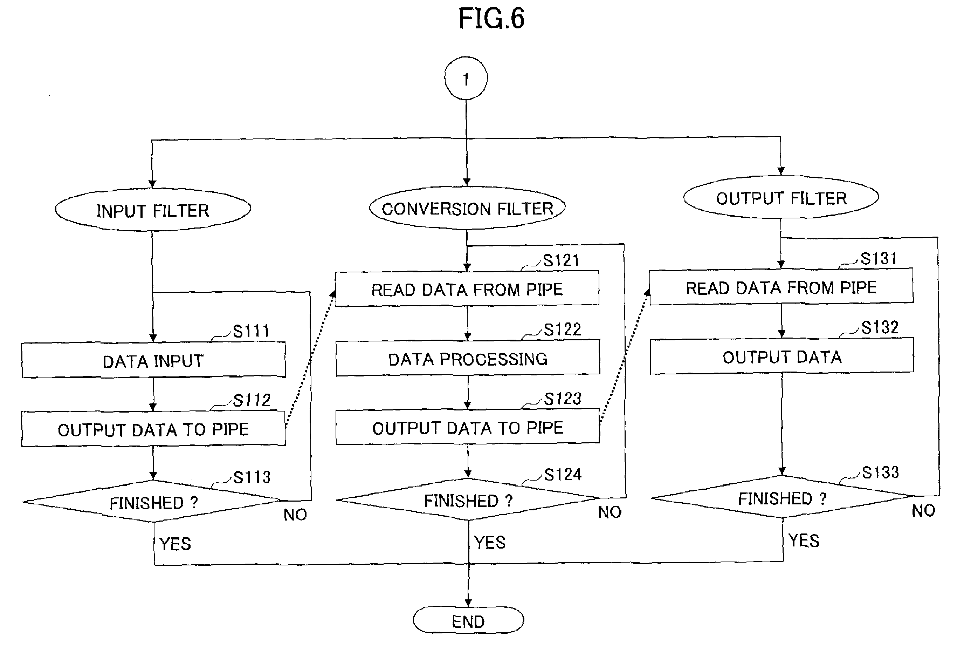

FIG. 6 is a flowchart illustrating further operations, continuing from step S108 in FIG. 5, of the multi-function peripheral 1 of the present embodiment for implementing one function.

As shown in FIG. 6, in step S111, the input filter receives data from an input device.

In step S112, the data are output to a pipe connected to the output side of the input filter.

In step S113, when the data are input plural times, for example, when plural sheet-documents are scanned sequentially, the data input operation (to the input filter) and data output operation (to the pipe) are repeated. When processing of all of the input data is finished, the operation of the input filter is finished.

The conversion filter starts operations when it is detected that data are input to the pipe connected to the input side of the conversion filter.

In step S121, the conversion filter reads in data from the pipe connected to the input side of the conversion filter.

In step S122, the conversion filter performs image processing on the data.

In step S123, the conversion filter outputs resulting data to the pipe connected to the output side of the conversion filter.

In step S124, when all of data input to the pipe connected to the input side of the conversion filter have been processed, the operation of the conversion filter is finished.

The output filter starts operations when it is detected that data are input to the pipe connected to the input side of the output filter.

In step S131, the output filter reads in data from the pipe connected to the input side of the output filter.

In step S132, the output filter outputs the data by using an output device.

In step S133, when all of data input to the pipe connected to the input side of the output filter have been processed, the operation of the output filter is finished.

Below, the pipe is described in more detail.

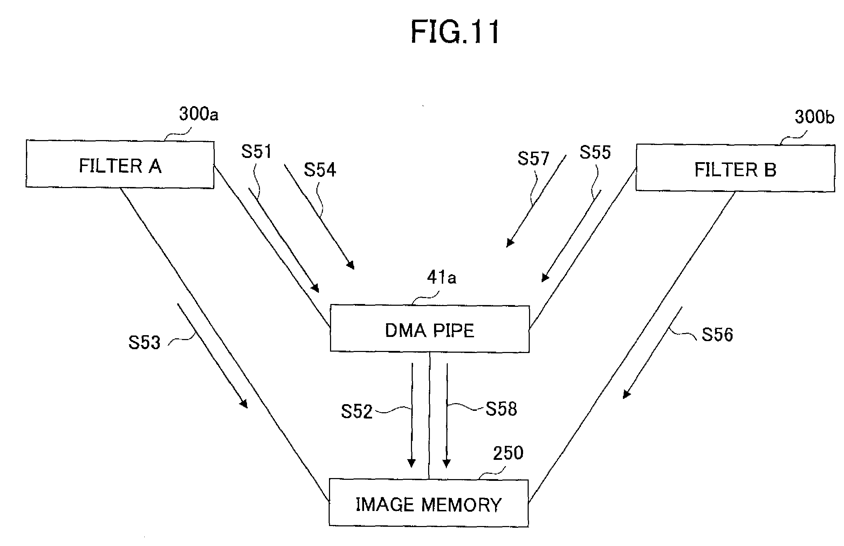

FIG. 11 is a diagram schematically illustrating a procedure of transmitting data between filters through pipes.

As shown in FIG. 11, there are two filters indicated as a filter A 300a and a filter B 300b. A DMA pipe 41a indicates a DMA pipe as described with reference to FIG. 9, which is an example of an image pipe. An image memory 250 indicates a physical image memory in the multi-function peripheral 1.

In step S51, when transmitting data (for example, image data) from the filter A 300a to the filter B 300b, the filter A 300a requests the DMA pipe 41a to secure a memory area in the image memory 250 for allocating the image data.

In step S52, the DMA pipe 41a reserves the memory area in the image memory 250, and returns the address of the memory area in the image memory 250 to the filter A 300a.

In step S53, the filter A 300a writes the image data into the image memory 250 at the returned address.

In step S54, the filter A 300a informs the DMA pipe 41a of the address at which the image data are written.

In step S55, the filter B 300b repeatedly (periodically) queries the DMA pipe 41a for the address at which the image data are written, until this address is sent to the filter B 300b.

It should be noted that instead of repeated querying as described the above, for example, the filter B 300b may await until the address is sent to the filter B 300b.

In step S56, when the address is sent to the DMA pipe 41a, the filter B 300b acquires the address, and determines whether writing data to the image memory 250 has occurred.

The filter B 300b reads out the image data from the address of the image memory 250, and executes processing relevant to the filter B 300b on the image data.

In step S57, when the processing is completed, the filter B 300b requests the DMA pipe 41a to open the memory area at this address.

In step S58, the DMA pipe 41a opens the memory area.

In this way, since data transmission between filters is performed through the image memory 250 (a common memory), it is not necessary to reserve a memory area for allocating image data for each filter, and it is possible to improve efficiency of the memory and performance of the system. In addition, since a calling relationship does not occur between filters, it is possible to maintain independence of the filters.

Next, an operational sequence in the multi-function peripheral 1 is explained with a specific function as an example.

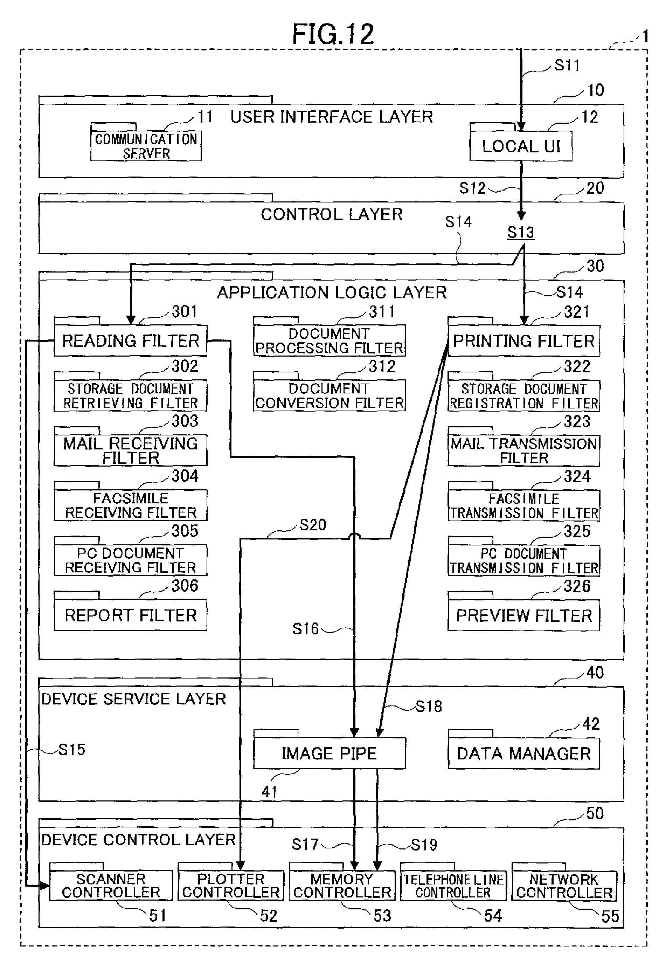

FIG. 12 is a block diagram illustrating a procedure of implementing a copy function according to the present embodiment.

As shown in FIG. 12, in step S11, the local user interface (UI) 12 receives input of a copy request (namely, filter selection) from a user through the operations panel 202 as shown in FIG. 7.

Although the user interface shown in FIG. 7, which facilitates users to select filters, is able to meet requirements flexibly, for frequently-used functions, such as the copy function, the user needs to select the filters each time it is desired to execute a function. This is not convenient to the user. To avoid this problem, for example, for those frequently-used functions such as the copy function, exclusively-used buttons can be displayed. For example, a "Copy" button can be displayed, and when the "Copy" button is selected, filters internally-used can be automatically selected.

In step S12, when the local user interface (UI) 12 receives the request from the user, the local user interface (UI) 12 requests the control layer 20 to execute the received request (selected filter).

In step S13, the control layer 20 connects the selected filters by pipes.

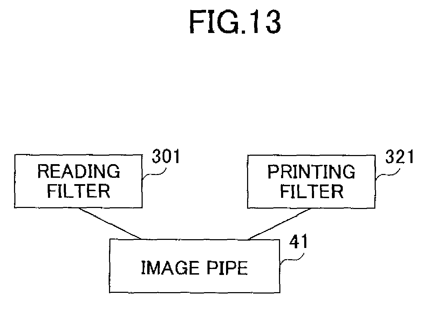

FIG. 13 is a diagram schematically illustrating a status of connecting filters associated with the copy function by pipes.

As shown in FIG. 13, the reading filter 301 and the printing filter 321 are connected by the image pipe 41.

In step S13, information indicating this status is generated. From FIG. 9, it is known that the image pipe 41 corresponds to the DMA pipe.

In step S14, the control layer 20 outputs requests of execution to the reading filter 301 and the printing filter 321 in parallel.

First, in step S15, the reading filter 301, which is an input filter, directs the scanner controller 51 to read an image.

Responsive to this command, under control of the scanner controller 51, a scanner (having an imaging unit) reads image data from a manuscript, and outputs the obtained data to the reading filter 301.

In step S16, the reading filter 301 outputs the image data to the image pipe 41. For example, here, the image pipe 41 is a memory.

In step S17, the image pipe 41 writes the image data in a memory through the memory controller 53. Here, DMA transmission is carried out.

In step S18, the printing filter 321 starts operations when it is detected that image data are written to the image pipe 41, which is connected to the input side of the printing filter 321. First, the printing filter 321 requests the image pipe 41 to read the image data.

In step S19, the image pipe 41 reads the image data through the memory controller 53.

In step S20, the printing filter 321 directs the plotter controller 52 to print the image data.

In response to this command, the image data are transmitted from the memory controller 53 to the plotter controller 52 by means of DMA; and under control of the plotter controller 52, the image data are printed by the plotter (serving as a printing unit).

Next, the printing function of a client PC is explained.

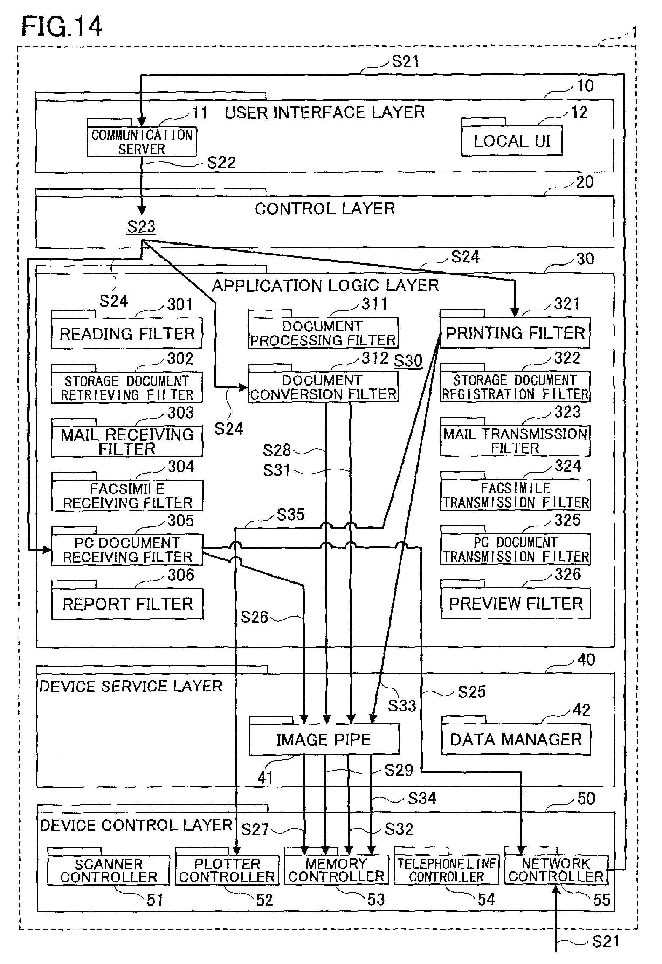

FIG. 14 is a block diagram illustrating a procedure of implementing a printing function according to the present embodiment.

As shown in FIG. 14, in step S21, a printing request is received from a client PC. The printing request is first received by the network controller 55, and is reported to the communication server 11.

In step S22, the communication server 11 selects filters necessary for implementation of the printing function, and requests the control layer 20 to connect the selected filters by pipes.

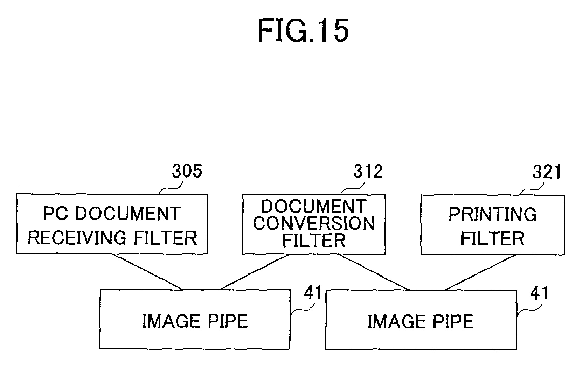

FIG. 15 is a diagram schematically illustrating a status of connecting filters associated with the printing function by pipes.

As shown in FIG. 15, the PC document receiving filter 305 and the document conversion filter 312 are connected by the image pipe 41, and the document conversion filter 312 and the printing filter 321 are connected by the image pipe 41.

From FIG. 9, the image pipe 41 between the PC document receiving filter 305 and the document conversion filter 312 corresponds to the spool pipe, and the image pipe 41 between the document conversion filter 312 and the printing filter 321 corresponds to the DMA pipe.

Next, in step S24 the control layer 20 outputs requests of execution to the filters to be used; specifically, the PC document receiving filter 305, the document conversion filter 312, and the printing filter 321, in parallel.

First, in step S25, the PC document receiving filter 305, which is an input filter, directs the network controller 55 to receive printing data (PDL).

In step S26, after receiving the printing data, the PC document receiving filter 305 outputs the received printing data to the image pipe 41.

In step S27, the image pipe 41 writes the printing data in a memory (here, the HDD) through the memory controller 53.

In step S28, the document conversion filter 312 starts operations when it is detected that the printing data are written to the image pipe 41, which is connected to the input side of the document conversion filter 312. First, the document conversion filter 312 requests the image pipe 41 to read the printing data.

In step S29, the image pipe 41 reads the printing data from the HDD through the memory controller 53, and outputs the printing data to the document conversion filter 312.

In step S30, the document conversion filter 312 converts the printing data into image data (bitmap data).

In step S31, the document conversion filter 312 outputs the resulting image data to the image pipe 41.

In step S32, the image pipe 41 writes the image data to the memory through the memory controller 53.

In step S33, the printing filter 321 starts operations when it is detected that image data are written into the image pipe 41, which is connected to the input side of the printing filter 321. First, the printing filter 321 requests the image pipe 41 to read the image data.

In step S34, the image pipe 41 reads the image data through the memory controller 53.

In step S35, the printing filter 321 directs the plotter controller 52 to print the image data.

In response to this command, the image data are transmitted from the memory controller 53 to the plotter controller 52 by means of DMA, and under control of the plotter controller 52, the image data are printed by the plotter (serving as a printing unit).

Although the copy function and the printing function are used as examples for purposes of explanation, other functions can be implemented by similar sequence.

According to the present embodiment, since filters are used as parts to construct different functions of the multi-function peripheral 1, it is possible to easily customize or expand functions of the multi-function peripheral 1. In other words, since the filters are not functionally dependent on other filters, but remain independent from each other, by adding new filters, or changing combination of filters, it is possible to easily implement new functions. Thus, when it is required to install a new application, and part of functions of the application is not installed, it is sufficient to just develop filters corresponding to the part of functions and install the filters. Hence, in layers having a rank lower than the control layer 20 and the application logic layer 30, it is possible to reduce the frequency of modification due to installation of the new applications, and it is possible to provide a stable platform.

In addition, since the user interface is installed for setting execution conditions in units of filters, or among applications implemented by using filters, the user interfaces of the filters can be commonly used by different applications; hence it is possible to reduce the number of steps in developing the user interface for each application.

### Second Embodiment

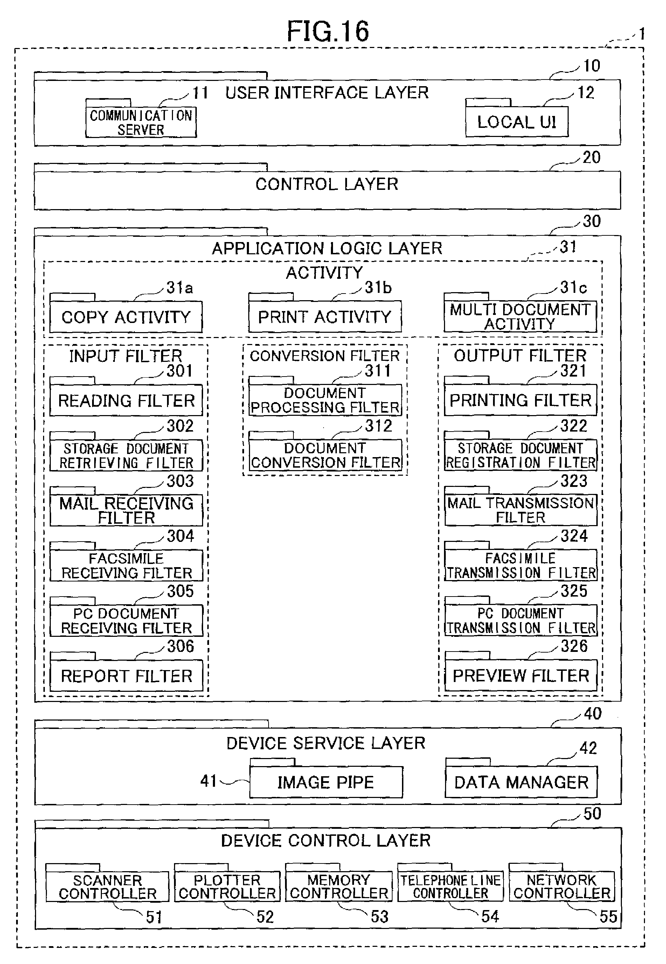

FIG. 16 is a block diagram illustrating an example of a software configuration of a multi-function peripheral (MFP) according to a second embodiment of the present invention.

In the present embodiment, the same reference numbers are assigned to the same elements as those described previously, and only differences between the present embodiment and the first embodiment are explained; overlapping descriptions are omitted.

As shown in FIG. 16, the application logic layer 30 includes a copy activity 31a, a print activity 31b, and a multi document activity 31c. Below, the copy activity 31a, the print activity 31b, and the multi document activity 31c are collectively referred to as "activity 31" where necessary.

In the present embodiment, the "activity" means software for implementing a function by combining filters definitely defined in advance. Here, one "function" means a complete unit service or a complete unit application provided by the multi-function peripheral 1 to users.

As described in the first embodiment, by using the user interface as illustrated in FIG. 7, users are allowed to select filters. Although the user interface is able to meet user's requirements flexibly, in the case of frequently-used functions, such as the copy function, the user needs to select the filters each time it is desired to execute a function. This is not convenient to the user.

In the present embodiment, the activity 31 is provided to solve this problem. Specifically, in the present embodiment, filter combinations are defined as the activities 31 beforehand, and when the user selects an activity 31 as a unit of an object to be executed, the filters included in the combination defined by the selected activity 31 are automatically executed.

Therefore, it is possible to prevent complicated operations, and at the same time, the user has the same feeling as with the conventional user interfaces, which allows users to select objects to be executed in units of applications.

In FIG. 16, for example, the copy activity 31a combines the reading filter 301, the document processing filter 311, and the printing filter 321 to implement the copy function (namely, a copy application). The print activity 31b combines the PC document receiving filter 305, the document conversion filter 312, and the printing filter 321 to implement the print function (namely, a print application).

The multi document activity 31c is an activity capable of arbitrary combination for each of the input filter, the conversion filter, and the output filter. That is, operations performed in the control layer 20 as described in the first embodiment are extracted as the multi document activity 31c.

The copy activity 31a, the print activity 31b, the multi document activity 31c, and other activities are independent from each other; basically, there is no dependent relationship (calling relation) between different activities 31. Thus, the activity 31 can be added (install) or deleted (un-install) as a unit. Therefore, in addition to the activities 31 shown in FIG. 16, activities of any other kinds of filter combinations can be created and installed when necessary.

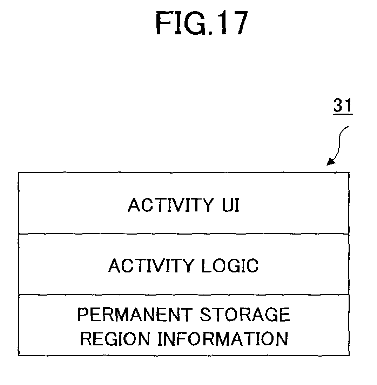

FIG. 17 is a table illustrating a configuration of the activity 31.

As shown in FIG. 17, the activity 31 includes an activity user interface (UI), activity logic, and permanent storage region information.

The activity user interface is a program or information for displaying a graphic image associated with the activity 31 on an operations panel (for example, the graphic image provides a setting screen for setting execution conditions of the activity 31).

The activity logic is a program for carrying out operations defined by the activity 31. Basically, the activity logic includes logic relevant to filter combinations, such as, order of executing the filters, settings associated with plural filters, a change of filter connection relation, and error processing.

The permanent storage region information corresponds to setting information of the activity 31 (such as default values of execution conditions), a scheme definition of data that ought to be stored in a non-volatile memory. The scheme definition is registered in the data manager 42 when installing the activity 31.

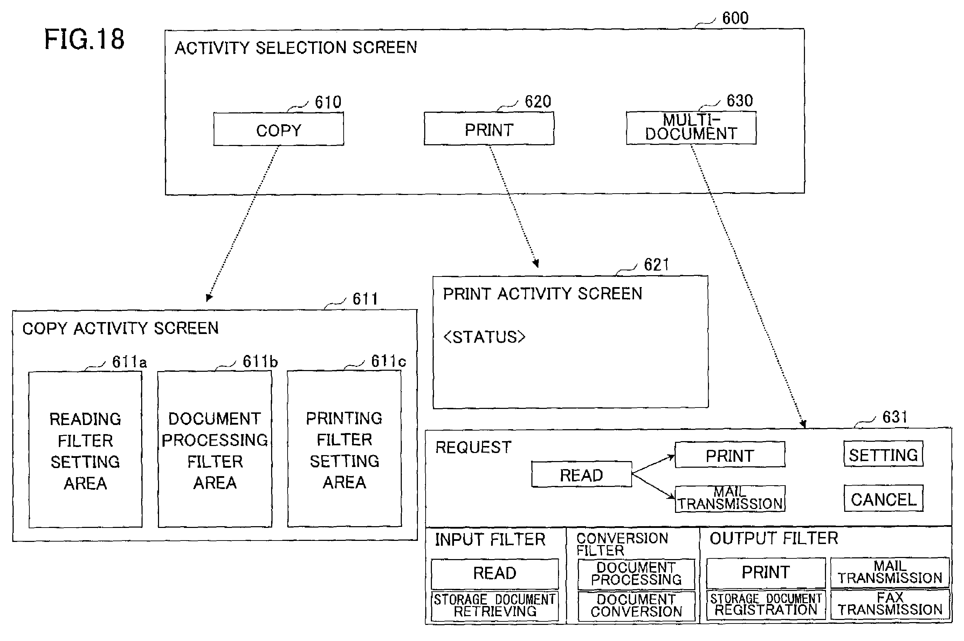

FIG. 18 is a block diagram illustrating examples of operational screens for utilizing the activities 31 according to the present embodiment.

As shown in FIG. 18, an activity selection screen 600 displays activity selection candidates (objects to be executed) on the touch panel 511 of the operations panel 202 for the user to select the activities. In the activity selection screen 600, buttons are displayed corresponding to the activities 31 provided by the multi-function peripheral 1. In FIG. 18, a copy button 610, a print button 620, and a multi-document button 630 are displayed which correspond to the copy activity 31a, the print activity 31b, and the multi document activity 31c, respectively.

Summary information of the activities 31 installed in the multi-function peripheral 1 is stored in the storage device of the multi-function peripheral 1, and, for example, the summary information of the activities 31 is controlled by the control layer 20. Due to this, if the local user interface (UI) 12 queries the control layer 20, the local user interface (UI) 12 can obtain the summary information of the installed activities 31, and based on the summary information, appropriate buttons are displayed on the activity selection screen 600.

In the activity selection screen 600, when the copy button 610 is selected (for example, the copy button 610 is touched), the local user interface (UI) 12 calls the activity user interface (UI) of the copy activity 31a; thereby, the local user interface (UI) 12 obtains information of the graphic image (screen) relevant to the copy activity 31a, and based on this information, a copy activity screen 611 is displayed on the touch panel 511.

The copy activity screen 611 is used for setting execution conditions of the copy activity 31a. In FIG. 18, it is illustrated that graphic images corresponding to the component filters of the copy activity 31a are displayed; specifically, there are displayed a reading filter setting area 611a, a document processing filter area 611b, and a printing filter setting area 611c. In other words, by setting execution conditions of the filters, the execution conditions of the copy activity 31a are determined.

The activity user interface (UI) of the copy activity 31a calls out the filter setting user interface (UI) in response to calling from the local user interface (UI) 12, thereby obtaining the information of the setting screens of the filters. The information is included (merged) in the screen information of the copy activity 31a.

In addition to simply displaying plural setting screens of the filters, a user interface (UI) for collectively setting the filters can also be displayed on the copy activity screen 611, for example, a "double face -> double face" button, a button for setting double-face reading, or a button for setting double-face printing.

When the print button 620 is selected (for example, the print button 620 is touched), the local user interface (UI) 12 calls out the activity user interface (UI) of the print activity 31b; thereby the local user interface (UI) 12 obtains information of the graphic image (screen) relevant to the print activity 31b; based on this information, a print activity screen 621 is displayed on the touch panel 511.

The print activity screen 621 is used for displaying the status of the print activity 31b (during printing). In other words, as described below, the print activity 31b is started responsive to reception of the printing data (data to be printed), but not started by operations on the operation panel 202; due to this, basically, a setting screen is not necessary for the print activity 31b.

When the multi-document button 630 is selected (for example, the multi-document button 630 is touched), the local user interface (UI) 12 calls the activity user interface (UI) of the multi document activity 31c, and thereby, the local user interface (UI) 12 obtains information of the graphic image (screen) relevant to the multi document activity 31c; based on this information, a multi document activity screen 631 is displayed on the touch panel 511. In FIG. 18, the graphic image displayed on the operation panel 202 as shown in FIG. 7 is presented as an example of the multi document activity screen 631.

Below, operations of the activities 31 described above are explained.

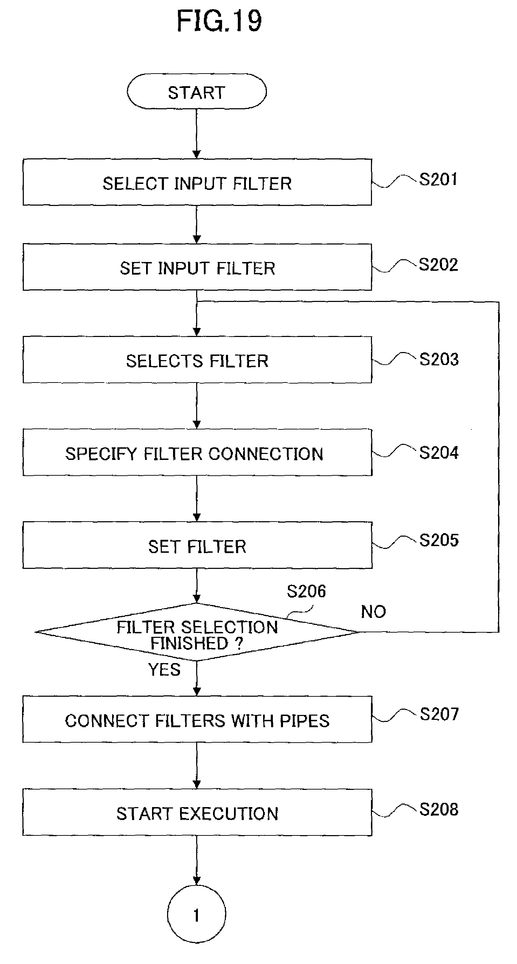

FIG. 19 is a flowchart illustrating operations of the multi document activity 31c of the present embodiment.

The flowchart in FIG. 19 is the same as that in FIG. 5; however since it is the multi document activity 31c that is executed in this example, some steps are different.

When the multi-document button 630 is selected on the activity selection screen 600, the multi document activity screen 631 is displayed on the touch panel 511 and the procedure shown in FIG. 19 is started.

As shown in FIG. 19, in step S201, the user selects an input filter on the multi document activity screen 631.

In step S202, execution conditions of the selected input filter are specified.

In step S203, similarly, the user selects a conversion filter or an output filter.

In step S204, the connection between the filters is specified.

In step S205, execution conditions of the filters are specified.

In the above setting, information of the selected input filter, the conversion filter, and the output filter is stored in the activity logic of the multi document activity 31c (for example, information indicating which filter is selected, or which two filters are connected). The execution conditions of these filters are stored in their own activity logics. In other words, with information stored in the activity logic of the multi document activity 31c, and information stored in the activity logics of the filters, information including order of executing the filters and setting of the filters (as shown in FIG. 8) are stored hierarchically.

In step S206, when filter selection and setting of execution conditions are finished, if the start button 512 is touched, the activity logic of the multi document activity 31c outputs the information including order of executing the filters and setting of the filters to the control layer 20.

In step S207, when receiving the information including order of executing the filters and setting of the filters, the control layer 20 connects the selected filters by pipes.

In step S208, the control layer 20 requests these filters to be executed in parallel. The subsequent operations are the same as those shown in FIG. 6.

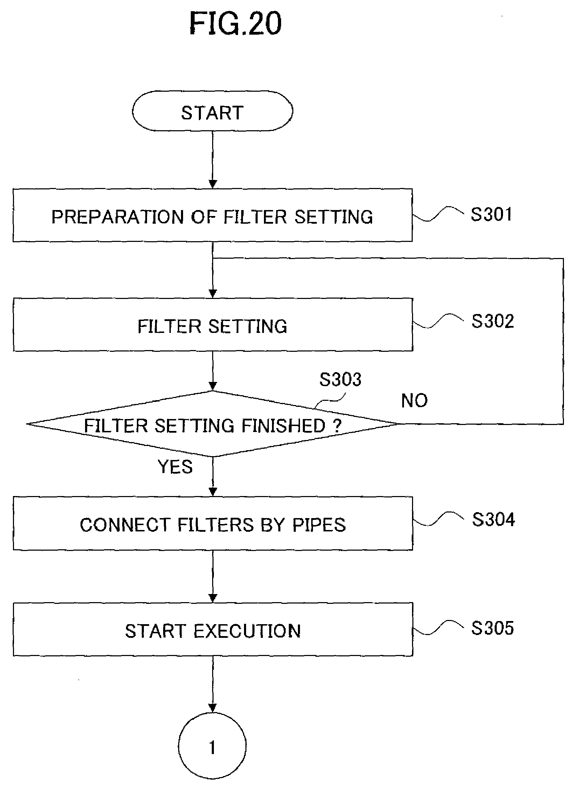

FIG. 20 is a flowchart illustrating operations of the copy activity 31a of the present embodiment.

When the copy button 610 is selected on the activity selection screen 600, the copy activity screen 611 is displayed on the touch panel 511, and the procedure shown in FIG. 20 is started.

As shown in FIG. 20, in step S301, the activity logic of the copy activity 31a selects the reading filter 301, the document processing filter 311, and the printing filter 321 as object filters to be executed, and sets the execution conditions of the filters.

In step S302, execution conditions of the selected filters are specified, respectively, in response to user's input on the copy activity screen 611.

The execution conditions are stored in the activity logics of the filters. In addition, when the execution conditions of the copy activity 31a are specified, the execution conditions are stored in the activity logic of the copy activity 31a.

In step S303, when setting of the execution conditions of the filters is finished, and if the start button 512 is touched, the activity logic of the copy activity 31a outputs information (as shown in FIG. 8) including order of executing the reading filter 301, the document processing filter 311, and the printing filter 321, and information including setting data of the reading filter 301, the document processing filter 311, and the printing filter 321 to the control layer 20.

In step S304, when receiving the information including order of filter execution and filter settings, the control layer 20 connects the selected filters by pipes.

In step S305, the control layer 20 requests these filters to be executed in parallel.

The subsequent operations are the same as those shown in FIG. 6.

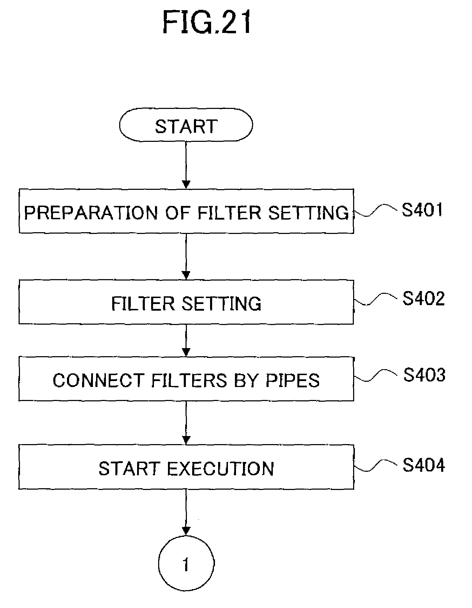

FIG. 21 is a flowchart illustrating operations of the print activity 31c of the present embodiment.

When the communication server 11 starts the print activity 31b in response to reception of printing data from a client personal computer (PC) or others, the procedure show in FIG. 21 is started.

As shown in FIG. 21, in step S401, the activity logic of the print activity 31b selects the PC document receiving filter 305, the document conversion filter 312, and the printing filter 321 as object filters to be executed, and sets the execution conditions of these filters.

In step S402, the activity logic of the print activity 31b receives printing setting information (paper size, double face printing, and so on) which is extracted by analyzing a header of the printing data by the communication server 11, and sets the setting information into the printing filter 321.

It should be noted that analysis of the header of the printing data may also be performed by the print activity 31b or the PC document receiving filter 305.

In step S403, the activity logic of the print activity 31b outputs information (as shown in FIG. 8) including order of executing the PC document receiving filter 305, the document conversion filter 312, and the printing filter 321, and information including setting data of the PC document receiving filter 305, the document conversion filter 312, and the printing filter 321 to the control layer 20.

When receiving the information including order of filter execution and filter settings, the control layer 20 connects the selected filters by pipes.

In step S404, the control layer 20 requests these filters be executed in parallel.

The subsequent operations are the same as those shown in FIG. 6.

According to the present embodiment, since functions implemented by combinations of filters are defined to be activities in advance, it is possible to utilize functions implemented by combinations of filters by simple operations.

In the above embodiments, the image pipe 41 corresponds to an example of the transmission units in claims, the user interface layer 10 corresponds to an example of the filter selection unit in claims, and the control layer 20 corresponds to an example of the filter connection unit in claims, the correspondence table 60 corresponds to an example of the correspondence relation management unit in claims, the activity 31 corresponds to an example of the function execution unit in claims.

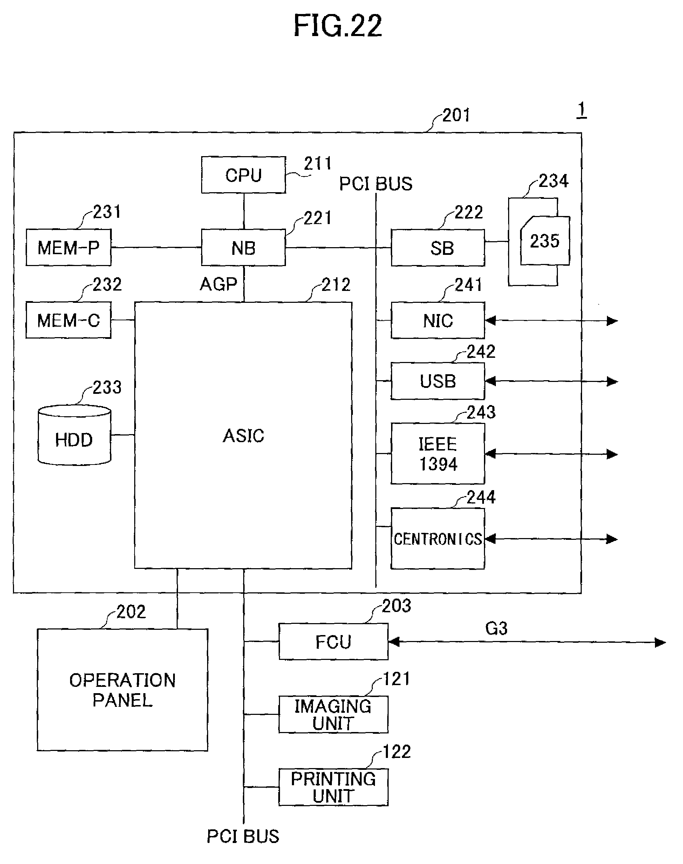

FIG. 22 is a block diagram illustrating an example of a hardware configuration of the multi-function peripheral (MFP) according to an embodiment of the present invention.

As shown in FIG. 22, the hardware system of the multi-function peripheral 1 includes a controller 201, an operations panel 202, a facsimile control unit (FCU) 203, an imaging unit 121, and a printing unit 122.

The controller 201 includes a CPU 211, an ASIC 212, a NB 221, a SB 222, a MEM-P 231, a MEM-C 232, a HDD (hard disk drive) 233, a memory card slot 234, a NIC (a network interface controller) 241, a USB device 242, an IEEE 1394 device 243, and a Centronics device 244.

The CPU 211 is an integrated circuit (IC) for various kinds of data processing.

The ASIC 212 is an integrated circuit for various kinds of image data processing.

The NB 221 is a North Bridge of the controller 201.

The SB 222 is a South Bridge of the controller 201.

The MEM-P 231 is a system memory of the multi-function peripheral 10.

The MEM-C 232 is a local memory of the multi-function peripheral 10.

The HDD 233 is a storage device of the multi-function peripheral 10.

The memory card slot 234 is a slot for inserting a memory card 235.

The NIC 241 is a controller for network communication with MAC addresses.

The USB device 242 is for providing connection terminals in compliance with the USB standard.

The IEEE 1394 device 243 is for providing connection terminals in compliance with the IEEE 1394 standard.

The Centronics device 244 is for providing connection terminals in compliance with the Centronics standard.

The operations panel 202 is a hardware operations portion serving as an input device allowing an operator to input data into the multi-function peripheral 10 and as a display device for displaying output from the multi-function peripheral 10.

In this present embodiment, software as shown in FIG. 1 for realizing various functions of the multi-function peripheral 1 are stored in the MEM-C 232, and are executed by the CPU 211 to realize the functions of the multi-function peripheral 1.

While the present invention is described with reference to specific embodiments chosen for purpose of illustration, it should be apparent that the invention is not limited to these embodiments, but numerous modifications could be made thereto by those skilled in the art without departing from the basic concept and scope of the invention.

This patent application is based on Japanese Priority Patent Applications No. 2006-128553 filed on May 2, 2006, and No. 2007-098069 filed on April 4, 2007, the entire contents of which are hereby incorporated by reference.

## Claims

1. An image forming device, comprising:
one or more input units that input image data for image processing;
one or more output units that output resulting data of the image processing;
a first filter that controls a data-input process from the input unit; and
a second filter that controls a data-output process to the output unit;
wherein
an application is formed by connecting the first filter and the second filter.

2. The image forming device as claimed in claim 1, wherein
the first filter outputs data input from the input unit,
the second filter outputs data input to the second filter to the output unit, and
the data output by the first filter is input to the second filter connected to the first filter.

3. The image forming device as claimed in claim 1, further comprising:
a third filter that executes the image processing according to a type of the image processing;
wherein
an application is formed by connecting the first filter, the third filter and the second filter.

4. The image forming device as claimed in claim 3, wherein
the third filter outputs data generated by executing the image processing on the data input to the third filter, and
the data output by the first filter is input to the third filter connected to the first filter, and the data output by the third filter is input to the second filter.

5. The image forming device as claimed in claim 1, wherein
the first filter, the third filter, and the second filter are able to be installed and un-installed independently.

6. The image forming device as claimed in claim 1, further comprising:
a user interface that has a display function and allows input of an execution condition of each of the first filter, the third filter, and the second filter in units of filters.

7. The image forming device as claimed in claim 1, further comprising:
a transmission unit that inputs the data output by one filter to another filter connected to the one filter,
wherein
the one filter is connected to the other filter by the transmission unit.

8. The image forming device as claimed in claim 7, further comprising:
a filter selection unit that selects one or more filters according to the execution condition of the application; and
a filter connection unit that connects the selected filters through the transmission unit, and outputs an execution request to each of the selected filters,
wherein
operations of the selected filters are synchronized by the transmission unit.

9. The image forming device as claimed in claim 8, wherein an operation of one filter is started when data input to the transmission unit connected to an input side of the one filter are detected.

10. The image forming device as claimed in claim 8, wherein
the transmission unit is of a plurality of types corresponding to actual means used for data transmission, and
the filter connection unit selects the type of the transmission unit used for connecting one or more filters in response to a combination of the one or more filters to be connected.

11. The image forming device as claimed in claim 10, further comprising:
a correspondence relation management unit that registers correspondence relationships between the combination of the filters to be connected and the transmission unit,
wherein
the filter connection unit, based on the correspondence relationships registered in the correspondence relation management unit, selects the type of the transmission unit associated with the combination of the filters to be connected.

12. The image forming device as claimed in claim 1, further comprising:
an operations panel,
wherein
a filter to be used is selected from a plurality of the filters displayed on the operation panel.

13. The image forming device as claimed in claim 12, wherein execution conditions of a plurality of the filters are able to be specified in units of filters on the operations panel.

14. The image forming device as claimed in claim 1, further comprising:
a function execution unit that corresponds to a combination of a plurality of the filters, said combination of the plurality of the filters being defined in advance,
wherein
the function execution unit executes the plurality of the filters included in the combination.

15. The image forming device as claimed in claim 14, wherein the function execution unit obtains information of a graphic image for setting execution conditions of the filters by the filters included in the combination corresponding to the function execution unit.

16. An application execution method executed in an image forming device including one or more input units that input image data for image processing, and one or more output units that output resulting data of the image processing, said method comprising:
a first selection step of selecting a first filter that controls a data-input process from the input unit;
a second selection step of selecting a second filter that controls a data-output process to the output unit; and
an execution step of executing an application formed by connecting the first filter and the second filter.

17. The application execution method as claimed in claim 16, wherein
the first filter outputs data input from the input unit,
the second filter outputs data input to the second filter to the output unit, and
the data output by the first filter are input to the second filter connected to the first filter.

18. The application execution method as claimed in claim 16, further comprising:
a third selection step of selecting a third filter that executes the image processing according to a type of the image processing,
wherein
in the execution step, the application is formed by connecting the first filter, the third filter and the second filter.

19. The application execution method as claimed in claim 18, wherein
the third filter outputs data generated by executing the image processing on the data input to the third filter, and
the data output by the first filter are input to the third filter connected to the first filter, and the data output by the third filter are input to the second filter.

20. The application execution method as claimed in claim 16, further comprising:
a step of defining a function execution unit corresponding to a combination of a plurality of the filters, said combination of the plurality of the filters being defined in advance,
wherein
in the execution step, the function execution unit executes the plurality of the filters included in the combination.
